**Europäisches Patentamt**

**European Patent Office**

**Office européen des brevets**

(19)

(11) Veröffentlichungsnummer: **0 043 553**
**B1**

(12)

# EUROPÄISCHE PATENTSCHRIFT

(45) Veröffentlichungstag der Patentschrift:
02.10.85

(51) Int. Cl.⁴: **G 21 C 15/18**

(21) Anmeldenummer: 81105105.1

(22) Anmeldetag: 01.07.81

(54) **Nachwärmeabfuhrsystem für einen gasgekühlten Kugelhaufenreaktor.**

(30) Priorität: 04.07.80 DE 3025336

(43) Veröffentlichungstag der Anmeldung:
13.01.82 Patentblatt 82/2

(45) Bekanntmachung des Hinweises auf die Patenterteilung:
02.10.85 Patentblatt 85/40

(84) Benannte Vertragsstaaten:
**CH FR GB LI**

(56) Entgegenhaltungen:
**DE - A - 1 564 546**
**DE - A - 2 352 691**
**DE - A - 2 521 269**
**DE - A - 2 625 543**
**DE - A - 2 640 786**
**DE - A - 2 732 741**
**DE - A - 2 838 548**
**FR - A - 1 458 504**

(73) Patentinhaber: **Kernforschungsanlage Jülich**
**Gesellschaft mit beschränkter Haftung, Postfach 1913,**
**D-5170 Jülich (DE)**

(72) Erfinder: **Petersen, Klaus, Dipl.-Ing.,**
**Hohenelchstrasse 84, D-5110 Herzogenrath-Kohlscheid**
**(DE)**

## Beschreibung

Die Erfindung bezieht sich auf ein Nachwärmeabfuhrsystem für einen gasgekühlten Kugelhaufenreaktor, dessen mit kugelförmigen Brennelementen bestückter, im Normalbetrieb vom Kühlgas von oben nach unten durchströmter Reaktorkern von einem den Kugelhaufen umschließenden Seitenreflektor umgeben ist, der sich zwischen Kühlgaseintritt und Kühlgasaustritt des Reaktorkerns erstreckt, wobei am Seitenreflektor mit Abstand vom Kühlgasaustritt eine Absaugleitung für das Kühlgas für den Nachwärmeabfuhrfall angeschlossen ist, die zu einem oder mehreren Nachwärmekühlern geführt ist, und wobei eine mit dem oder den Nachwärmekühlern verbundene Kühlgasrückführleitung das Kühlgas in den Reaktorkern zurückleitet.

Beim Abschalten gasgekühlter Kernreaktoren tritt aufgrund des weiteren Zerfalls radioaktiver Spaltprodukte eine Nachwärmeentwicklung auf, die nach dem Abschalten noch über längere Zeit wirksam ist. Die Nachwärmeabfuhr ist insbesondere bei Ausfall des normalen Kühlgaskreislaufs im Reaktor von größter Bedeutung. Für gasgekühlte Kugelhaufenreaktoren werden daher redundante Nachwärmeabfuhrsysteme eingesetzt.

Bekannt ist es, zur Nachwärmeabfuhr Hilfskühlgaskreisläufe vorzusehen, die den Haupt-Kühlgaskreisläufen, den sogenannten Betriebsloops, parallel geschaltet sind. Die Betriebsloops und die Nachwärmeabfuhrsysteme sind somit am Kühlgaseintritt und Kühlgasaustritt des Reaktorkerns miteinander verkoppelt. Die hierdurch bedingte Schwierigkeit, bei der Nachwärmeabfuhr die Kühlgasströmung in den Betriebsloops zu drosseln und insbesondere eine zu unterstellende Kurzschlußströmung im Kühlgaskreislauf erfordert die Auslegung leistungsstarker Gebläse- und Kühleinrichtungen im Nachwärmeabfuhrsystem. Auch läßt sich wegen der Bypaßströmung in den Betriebsloops nicht verhindern, daß im Störfall freigesetzte korrosive Medien aus den Betriebsloops in den Reaktorkern gespült werden und Graphitkorrosion verursachen. Hinzu kommt, daß bei Hochtemperaturreaktoren mit Gasturbinen bei einem Druckentlastungsstörfall, bei dem Kühlgas über einen größeren Öffnungsquerschnitt entweicht, und/oder bei einer Turbinenentschaufelung durch Ausbreiten des Druckstoßes Folgeschäden auch in anderen parallelen Kühlgaskreisläufen und/oder im Nachwärmeabfuhrsystem nicht auszuschließen sind. Aus der DE-A-2 713 463 ist es bekannt, die parallel geführten Betriebsloops durch Einbau von Zwischenwänden in den Kühlgaskammern weitgehend zu entkoppeln.

Bekannt ist es bei Hochtemperaturreaktoren mit Gasturbinen auch, die Nachwärmeabfuhr unter Ausnutzung noch intakter Betriebsloops durch Öffnen eines Bypasses im Arbeitsgaskreislauf oder durch Zuschalten eines sekundären Wasser-Notkühlgaskreislaufs abzuführen (DE-B-2 159 696, DE-A-2 440 140). Auch bei diesen Nachwärmeabfuhrsystemen wird eine Kopplung von Betriebsloops und/oder Notkühlsystemen vorausgesetzt, so daß Querströmungen des Kühlgases unvermeidlich sind, die die gewünschte rasche Abfuhr der Nachwärme nachteilig beeinflussen. Von Nachteil ist darüber hinaus, daß die Nachwärme bei hohen Kühlgastemperaturen abgeführt werden muß, was eine diesem Zustand Rechnung tragende, aufwendige Ausgestaltung des Notkühlsystems erforderlich macht.

Aus DE-A-2 640 786 ist es bekannt, einen Nachwärmekühler für einen Kugelhaufenreaktor am Seitenreflektor des Reaktorkerns im Eintrittsbereich des Kühlgases oberhalb des Kugelhaufens anzuschließen und das Kühlgas mit niedriger Temperatur in das Nachwärmeabfuhrsystem einzuleiten. Die Kühlgasrückführleitung dieses Nachwärmekühlers ist an der Heißgasleitung des Kugelhaufenreaktors angeschlossen. Eine wirkungsvolle Entkopplung des Nachwärmeabfuhrsystems von den Betriebsloops ist hiermit nicht gegeben. Auch genügt die Nachwärmeabfuhr vor allem im Druckentlastungsstörfall nicht allen erforderlichen Ansprüchen.

Aufgabe der Erfindung ist es, für einen gasgekühlten Kugelhaufenreaktor ein von den Betriebsloops primärseitig entkoppeltes Nachwärmeabfuhrsystem zu schaffen, das unter Beibehaltung der Nachwärmeauskopplung bei niedrigen Arbeitsgastemperaturen im Falle eines Luft-, Wasser- oder Prozeßgaseinbruchs in einem der Betriebsloops ein intensives Bespeisen des Reaktorkerns mit korrosiven Gasen verhindert.

Diese Aufgabe der Erfindung wird für einen gasgekühlten Kernreaktor der eingangs genannten Art durch die im Kennzeichen des Patentanspruchs 1 angegebene Ausbildung des Nachwärmeabfuhrsystems gelöst. Danach ist die zu dem oder den Nachwärmekühlern geführte Absaugleitung für das Kühlgas etwa in mittlerer Höhe zwischen Kühlgaseintritt und Kühlgasaustritt des Reaktorkerns angeschlossen, und die Kühlgasrückführleitung mündet am Kühlgaseintritt des Reaktorkerns. Dem oder den Nachwärmekühlern wird also nur mäßig erhitztes Kühlgas zugeführt, wobei zugleich eine Entkopplung des Nachwärmeabfuhrsystems von den Betriebsloops erreicht wird. Die Nachwärmeabfuhr ist unmittelbar auf den leistungserzeugenden Teil des Reaktorkerns abgestellt und ist unbeeinträchtigt funktionsfähig, auch bei Bruch einer Heißgasleitung eines Betriebsloops. Die niedrigen Kühlgastemperaturen ermöglichen es, Nachwärmekühler geringerer Leistung mit dementsprechend geringen Raumbedarf einzusetzen und somit die Baukosten für das Nachwärmeabfuhrsystem zu senken.

Eine selbsttätig einsetzende Nachwärmeabfuhr infolge natürlicher Konvektion wird durch in Patentansprüchen 2 und 3 angegebenen Ausbildungen des Wärmeabfuhrsystems erreicht. Mit im Patentanspruch 4 angegebenen Maßnahmen lassen sich die den Reaktorkern umgebenden Reflektoren mit Hilfe von Kühlgas kühlen, das das Nachwärmeabfuhrsystem durchströmt.

Um während des Normalbetriebes einen Kühlgasnebenstrom durch das Nachwärmeabfuhrsystem hindurch in die Kugelschüttung des Reaktorkerns zu verhindern, ist in der Kühlgasrückführleitung ein Verschluß eingesetzt, der sich im Störfall öffnet (Patentanspruch 5). Als Verschluß eignet sich beispielsweise ein pendelnd gelagerte Rückschlagklappe, die die Kühlgasrückführleitung bei Normalbetrieb des Reaktors in Folge des Kühlgasüberdrucks an der Kühlgaseintrittseiten des Reaktorkerns absperrt.

In weiterer Ausgestaltung der Erfindung ist für den Anschluß der Absaugleitung am Seitenreflektor ein Reflektorelement vorgesehen, dessen Durchströmöffnungen für das Kühlgas derart geformt sind, daß Neutronenstrahlen aus dem Reaktorkern unmittelbar nicht austreten können (Patentanspruch 6). Die Durchströmöffnungen können beispielsweise bogenförmig oder spiralförmig gestaltet sein. Bevorzugt besteht das Reflektorelement zum Anschluß der Ansaugleitung aus einem inneren und einem äußeren Reflektorstein mit geradlinig verlaufenden Durchströmöffnungen. Das Austreten von Neutronenstrahlen wird dann dadurch verhindert, daß man beide Reflektorsteine in der Weise einsetzt, daß die Durchströmöffnungen versetzt zueinander angeordnet sind (Patentanspruch 7).

Zweckmäßig werden am Seitenreflektor mehrere Loops zur Nachwärmeabfuhr in Parallelschaltung angeschlossen.

Die Erfindung wird anhand in der Zeichnung schematisch dargestellter Ausführungsbeispiele näher erläutert. Es zeigt im einzelnen

Fig. 1 Reaktorkern mit Betriebsloop und einem Nachwärmeabfuhrsystem,

Fig. 2 Teilschnitt eines Reaktorkerns mit einem mehrere Loops aufweisenden Nachwärmeabfuhrsystem,

Fig. 3 Querschnitt des Reaktorkerns nach Fig. 2 gemäß Schnittlinie III/III.

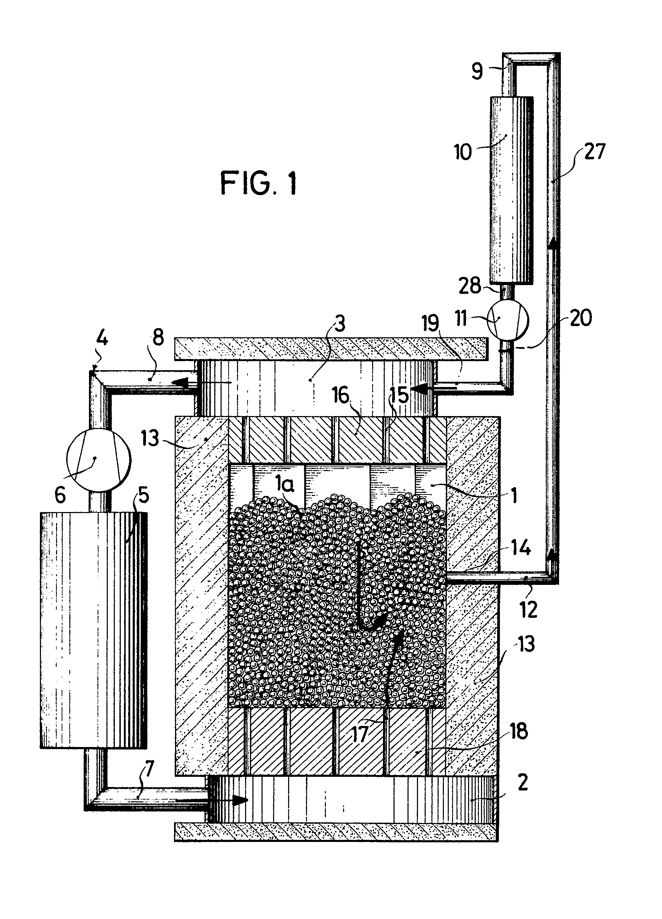

In Fig. 1 ist schematisch ein Reaktorkern 1 eines Kugelhaufenreaktors (der Kugelhaufen ist in Fig. 1 mit Bezugszeichen 1a bezeichnet) mit einem an Heißgaskammer 2 und Kaltgaskammer 3 angeschlossenen Betriebsloop 4 dargestellt. Der Betriebsloop weist einen Wärmetauscher 5 und ein Gebläse 6 auf. Bei Normalbetrieb durchströmt das Kühlgas den Betriebsloop 4 entgegengesetzt zu der in Heißgasleitung 7 und Kaltgasleitung 8 des Betriebsloops in Fig. 1 eingezeichneten Pfeilrichtung. Die Pfeile geben die Strömrichtung des Kühlgases für den Fall der Nachwärmeabfuhr an. Hierzu ist mit dem Reaktorkern 1 ein Nachwärmeabfuhrsystem 9 mit Nachwärmekühler 10 und Gebläse 11 verbunden. Der Nachwärmekühler 10 ist mittels einer Absaugleitung 12 am Seitenreflektor 13 in dessen den Kugelhaufen umgebenden Bereich angeschlossen. Die Anschlußstelle 14 für die Absaugleitung 12 ist mit Abstand von Kühlgaseintritt 15 im Deckenreflektor 16 und Kühlgasaustritt 17 im Bodenreflektor 18 etwa in mittlerer Höhe des Seitenreflektors angeordnet. Die Lage der Anschlußstelle 14 wird in vorteilhafter Weise in Abhängigkeit vom Leistungsprofil des Reaktorcores gewählt. Das heiße Kühlgas wird bevorzugt wenig unterhalb des Maximums des Leistungsprofils aus dem Reaktorcore entnommen und zu den Nachwärmekühlern geführt.

In Fig. 1 ist die Kühlgasströmung bei Betrieb des Nachwärmeabfuhrsystems durch Pfeile angedeutet. Es wird dabei davon ausgegangen, daß der Betriebsloop außer Betrieb ist und nur von einem geringen Teil des Kühlgases von der Kaltgaskammer 3 zur Heißgaskammer 2 hin durchströmt wird, also in einer der Strömungsrichtung des Kühlgases bei Normalbetrieb entgegengesetzten Richtung. Der Hauptgasstrom für die Nachwärmeabfuhr wird vom Gebläse 11 aus dem mittleren Bereich des Reaktorkerns abgesaugt. In diesem Bereich hat das Kühlgas die bei Normalbetrieb des Reaktors erzeugbare maximale Gastemperatur noch nicht erreicht. Das Nachwärmeabfuhrsystem ist somit für eine geringere Kühlleistung auslegbar, als Nachwärmeabfuhrsysteme, die dem Betriebsloop parallel geschaltet und an der Heißgaskammer des Reaktors angeschlossen sind. Von Vorteil ist jedoch vor allem, die primärseitige Entkoppelung des Nachwärmeabfuhrsystems vom Betriebsloop, da so auch für den Fall des Bruches einer Heißgasleitung des Betriebsloops die für den Kühlgasumlauf benötigte Gebläse- und Kühlleistung für die Nachwärmeabfuhr begrenzt bleiben. Der Anschluß des Nachwärmeabfuhrsystems am Seitenreflektor im Bereich des Kugelhaufens begrenzt auch bei einem Luft-, Wasseroder Prozeßgaseinbruch in den Kühlgaskreislauf das Einspeisen korrosiver Gase in die Kugelschüttung. Das Nachwärmeabfuhrsystem ist durch Drucktransienten, die beispielsweise bei einem Druckentlastungsstörfall, bei dem Kühlgas über einen größeren Öffnungsquerschnitt entweicht, und/oder bei einer Turbinenentschaufelung bei einem Hochtemperaturreaktor mit Gasturbine zu berücksichtigen sind, nur in geringem Maße gefährdet. Im Druckentlastungsstörfall ist vom Gebläse des Nachwärmeabfuhrsystems nur eine geringe Leistung für die Aufrechterhaltung des Kühlgaskreislaufs für die Nachwärmeabfuhr aufzubringen. Der geringe Kühlgasanteil, der von der Heißgaskammer her durch den unteren Reaktorkernbereich in das Nachwärmeabfuhrsystem einströmt, kühlt zugleich den Bodenreflektor sowie den unteren Teil des Reaktorkerns.

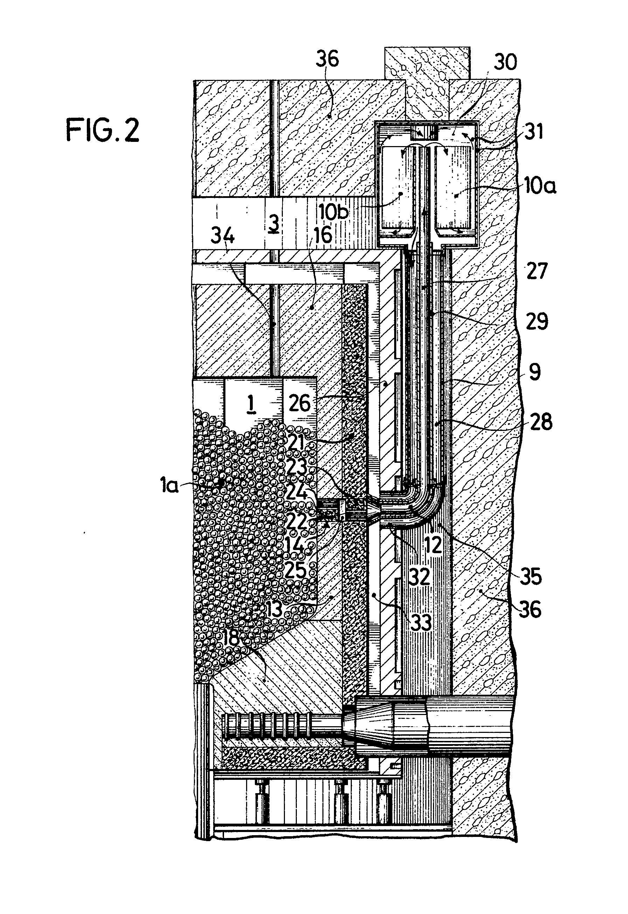

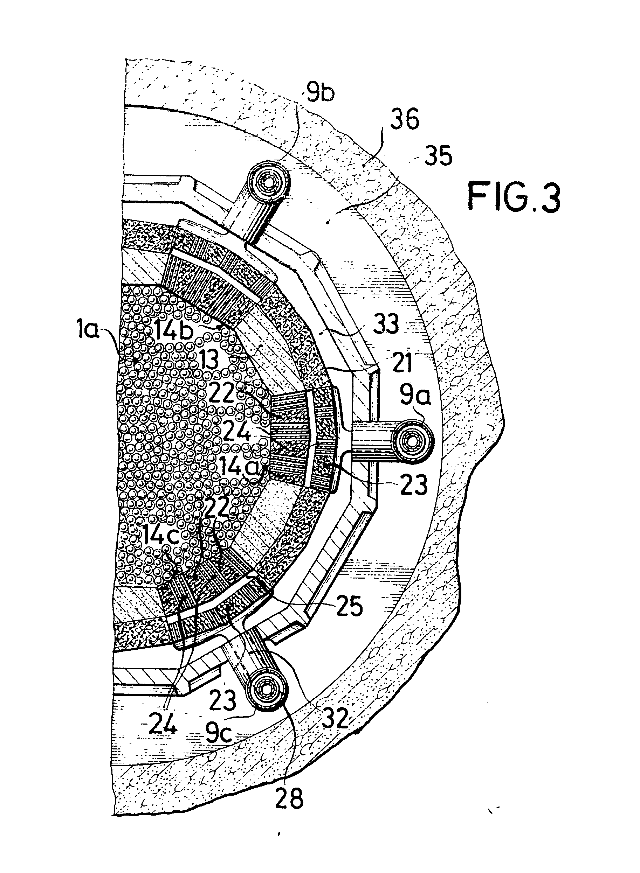

In einer Kühlgasrückführleitung 19, in der das Kühlgas nach Durchströmen des Nachwärmekühlers 10 in die Kaltgaskammer 3 geleitet wird, ist ein Verschluß 20 eingesetzt, im Ausführungsbeispiel eine pendelnd gelagerte Rückschlagklappe, die während des Normalbetriebs des Reaktors geschlossen ist und einen Nebenstrom des Kühlgases aus der Kaltgaskammer 3 durch das Nachwärmeabfuhrsystem 9 hindurch zum Reaktorkern 1 verhindert. Die Rückschlagklappe ist geschlossen, solange der Druck in dem räumlich mit der Kaltgaskammer 3 in Verbindung stehenden Teil der Kühlgasrückführleitung 19 vor der Rückschlagklappe größer ist als der Druck im übrigen Teil der Kühlgasrückführleitung hinter der Rückschlagklappe. Die Rückschlagklappe kann zusätzlich mit einer fremdangetriebenen Öffnungsvorrichtung verbunden sein. In Fig. 2 und 3 ist ein aus mehreren Loops 9a, 9b, 9c, bestehendes Nachwärmeabfuhrsystem für einen gasgekühlten Hochtemperaturreaktor dargestellt. Die Nachwärmeabfuhrloops sind am Seitenreflektor 13 des den Kugelhaufen 1a aufnehmenden Reaktorkerns 1 in Parallelschaltung angeschlossen. An jeder Anschlußstelle 14a, 14b, 14c am Seitenreflektor, der noch von einem äußeren Seitenreflektor umgeben ist, sind ein innerer und ein äußerer Reflektorstein 22, 23 vorgesehen. Beide Reflektorsteine weisen jeweils geradlinig verlaufende Durchströmöffnungen 24 auf. Der innere Reflektorstein 22 ist gegenüber dem äußeren Reflektorstein 23 mit geringem Abstand 25 und in der Weise eingesetzt, daß die Durchströmöffnungen des einen Reflektorsteins zu den Durchströmöffnungen des anderen Reflektorsteins versetzt angeordnet sind. Dies hat den Zweck, die Absaugleitung 12 vor austretenden Neutronenstrahlen aus dem Reaktorkern 1 zu schützen.

Die Absaugleitung 12 jedes Nachwärmeloops durchdringt einen den Reaktorkern 1 umgebenden thermischen Schild 26 und verläuft als Warmgassteigleitung 27 koaxial innerhalb einer Fall-Leitung 28, in der das von Nachwärmekühlern 10a, 10b abströmende Kaltgas geführt wird. Die Warmgassteigleitung 27 ist zur Verminderung eines Wärmeaustauschers innerhalb der Koaxialleitung mit einer Isolation 29 versehen. Jedem Nachwärmekühler 10a, 10b ist in gleicher Weise, wie beim Ausführungsbeispiel nach Fig. 1 ein Gebläse nachgeschaltet. Die Gebläse sind in Fig. 2 und 3 jedoch nicht gesondert dargestellt. Das Kaltgas wird in einer die Nachwärmekühler aufnehmenden Wärmetauscherkammer zunächst zur Kühlung einer äußeren Wand 31 der Wärmetauscherkammer benutzt und an der inneren Seite der Wand 31 entlanggeführt. Es strömt danach innerhalb der Fall-Leitung 28 zur Kühlgasrückführleitung 19. Durch den thermischen Schild 26 führt eine Koaxial-Durchführung 32. Das Kaltgas wird in einen zwischen thermischen Schild 26 und den Reflektoren 13, 15, 18 vorhandenen Zwischenraum 33, den sogenannten Reflektorspalt eingeführt. Aus dem Reflektorspalt strömt das Kaltgas schließlich über Kaltgasführungen 34 im Deckenreflektor 16 wieder in den Reaktorkern 1 ein und durchströmt den Kugelhaufen erneut.

Die Führung des heißen Kühlgases im Nachwärmeabfuhrsystem über die Warmgassteigleitung 27 zu den Nachwärmekühlern 10a, 10b und — nach Abkühlung — über die Fall-Leitung 28 zur Koaxial-Durchführung 32 ermöglicht in vorteilhafter Weise einen Betrieb des Nachwärmeabfuhrsystems auch dann, wenn im Störfall die Gebläse des Nachwärmeabfuhrsystems funktionstüchtig geworden sein sollten oder wegen Ausfalls der elektrischen Versorgung der Kernenergieanlage nicht einsatzfähig wären. In diesem Falle setzt nämlich die Nachwärmeabfuhr infolge natürlicher Konvektion des Kühlgases im Nachwärmeabfuhrsystem selbsttätig ein. Hierzu dient auch die Isolation 29 der Warmgassteigleitung 27, die sicherstellt, daß sich bereits während des Normalbetriebes in der Warmgassteigleitung eine warme Gassäule ausbildet, die der natürlichen Konvektion im Nachwärmeabfuhrsystem zum Anlauf dient. Dies trägt erheblich zur Erhöhung der Reaktorsicherheit bei. Aus Gründen der Zuverlässigkeit und ständigen Einsatzbereitschaft des Nachwärmeabfuhrsystems werden die Nachwärmeabfuhrloops bevorzugt auch während des Normalbetriebs des Reaktors mit geringer Gebläseleistung betrieben. Der so erzeugte Massenstrom, der im Nachwärmeabfuhrsystem gegen die von den Betriebsloops erzeugte Druckdifferenz umzuwälzen ist, hält einerseits die Aggregate der Nachwärmeabfuhrloops auf Betriebstemperatur, was für den Einsatz des Nachwärmeabfuhrsystems unter Ausnutzung von Naturkonvektion sehr vorteilhaft ist, andererseits kühlt das umgewälzte Kühlgas im Zwischenraum 33 die Reflektorrückwand. Auch wird eine Kaltgasströmung des Kühlgases aus der Kaltgaskammer durch das Nachwärmeabfuhrsystem hindurch in den Reaktorkern verhindert. Der ständige Betrieb des Nachwärmeabfuhrsystems führt zugleich zu einem Dauertest für die Betriebsbereitschaft der Nachwärmeabfuhrloops.

Im Ausführungsbeispiel nach Fig. 1 und 2 ist die Wärmetauscherkammer 31 des Nachwärmeabfuhrsystems platzsparend im Kontrollgang 35 im Spannbetonbehälter 36 des Hochtemperaturreaktors untergebracht.

Die Nachwärmeabfuhrloops sind gleichmäßig um den Reaktorkern 1 verteilt angeordnet. Im Ausführungsbeispiel ist der Reaktorkern für eine thermische Leitung von 500 MW ausgelegt. Die Kühlleistung jedes Nachwärmeabfuhrloops beträgt 33% der insgesamt für die Nachwärmeabfuhr erforderlichen Kühlleistung, so daß auch bei Ausfall von 1 bis 2 Betriebsloops keine Beeinträchtigung der erforderlichen Kühlleistung für die Nachwärmeabfuhr gegeben ist. An den Nachwärmekühlern läßt sich je nach Gasdurchsatz eine Abkühlung des Kühlgases auf 100 bis 305°C erreichen. Die Temperatur im Reaktorkern würde bei einem Druckentlastungsstörfall nicht über 800°C ansteigen und bei einem Störfall unter Druck innerhalb von 2 Zeitstunden auf etwa 600°C abgesenkt werden können. Beim Störfall unter Druck werden für die Nachwärmeabfuhr im Reaktorkern Massendurchsätze von 6 kg/sec, beim Druckentlastungsstörfall von 2 kg/sec benötigt.

Im Ausführungsbeispiel sind die Nachwärmeabfuhrloops innerhalb des Spannbetonbehälters 36 eingesetzt. Sie lassen sich jedoch auch in gesonderten Pods des Spannbetonbehälters unterbringen.

## Patentansprüche

1. Nachwärmeabfuhrsystem für einen gasgekühlten Kugelhaufenreaktor, dessen mit kugelförmigen Brennelementen bestückter, im Normalbetrieb vom Kühlgas von oben nach unten durchströmter Reaktorkern von einem den Kugelhaufen umschließenden Seitenreflektor umgeben ist, der sich zwischen Kühlgaseintritt und Kühlgasaustritt des Reaktorkerns erstreckt, wobei am Seitenreflektor mit Abstand vom Kühlgasaustritt eine Absaugleitung für das Kühlgas für den Nachwärmeabfuhrfall angeschlossen ist, die zu einem oder mehreren Nachwärmekühlern geführt ist, und wobei eine mit dem oder den Nachwärmekühlern verbundene Kühlgasrückführleitung das Kühlgas in den Reaktorkern zurückleitet, dadurch gekennzeichnet, daß die Absaugleitung (12) etwa in mittlerer Höhe zwischen Kühlgaseintritt (15) und Kühlgasaustritt (17) angebracht ist und daß die Kühlgasrückführleitung (19) am Kühlgaseintritt (15) des Reaktorkerns (1) mündet.

2. Nachwärmeabfuhrsystem nach Anspruch 1, dadurch gekennzeichnet, daß der oder die Nachwärmekühler (10, 10a, 10b) eine von sich abkühlendem Kühlgas unter Einwirkung der Schwerkraft durchströmbare Fall-Leitung (28) aufweisen, die in die Kühlgasrückführleitung (19) mündet.

3. Nachwärmeabfuhrsystem nach Anspruch 2, dadurch gekennzeichnet, daß die Fall-Leitung (28) koaxial zu einer das heiße Kühlgas zu dem oder zu den Nachwärmekühlern (10, 10a, 10b) führenden Warmgassteigleitung (27) angeordnet ist.

4. Nachwärmeabfuhrsystem nach einem der Ansprüche 1, 2 oder 3, dadurch gekennzeichnet, daß ein zwischen Seitenreflektor (13) und thermischem Schild (26) vorhandener Zwischenraum (33) einen Teil der Kühlgas-Rückführleitung (19) bildet.

5. Nachwärmeabfuhrsystem nach einem der vorhergehenden Ansprüche, dadurch gekennzeichnet, daß in der Kühlgas-Rückführleitung (19) ein sich im Nachwärmeabfuhrfall öffnender Verschluß (20) eingesetzt ist.

6. Nachwärmeabfuhrsystem nach einem der vorhergehenden Ansprüche, dadurch gekennzeichnet, daß die Absaugleitung (12) am Seitenreflektor (13) an einem Reflektorelement (22, 23) angeschlossen ist, dessen Durchströmöffnungen derart geformt sind, daß die Absaugleitung (12) vor aus dem Reaktorcore austretenden Neutronenstrahlen geschützt ist.

7. Nachwärmeabfuhrsystem nach Anspruch 6, dadurch gekennzeichnet, daß das Reflektorelement aus einem inneren und einem äußeren Reflektorstein (22, 23) mit geradlinig verlaufenden Durchströmöffnungen (24) besteht, und daß die Reflektorsteine (22, 23) derart im Seitenreflektor (13) eingesetzt sind, daß die Durchströmöffnungen (24) des inneren Reflektorsteins (22) gegenüber den Durchströmöffnungen (24) des äußeren Reflektorsteins (23) versetzt angeordnet sind.

8. Nachwärmeabfuhrsystem nach einem der vorhergehenden Ansprüche, dadurch gekennzeichnet, daß am Seitenreflektor (13) mehrere, parallel geschaltete Loops (9a, 9b, 9c) zur Nachwärmeabfuhr angeschlossen sind.

## Claims

1. Residual-heat removal system for a gas-cooled pelletised-fuel reactor, whose reactor core, equipped with spherical fuel elements and having cooling gas flowing through it downwardly from above in normal operation, is surrounded by a side reflector which surrounds the pelletised fuel and which extends between the cooling gas inlet and the cooling gas outlet of the reactor core, there being connected to the side reflector, at a spacing from the cooling gas outlet, a suction removal conduit for the cooling gas for the removal of residual heat, said conduit being taken to one or more residual-heat coolers, and a cooling gas return conduit connected to the residual-heat cooler or coolers conducts the cooling gas back into the reactor core, characterised in that the suction conduit (12) is arranged approximately half-way up between the cooling gas inlet (15) and the cooling gas outlet (17) and that the cooling gas return conduit (19) debouches at the cooling gas inlet (15) of the reactor core.

2. Residual-heat removal system according to claim 1, characterised in that the residual-heat cooler or coolers (10, 10a, 10b) has/have a downcomer conduit (28) through which cooling gas which is cooling can flow because of the action of gravitational force and which opens into the cooling gas return conduit (19).

3. Residual-heat removal system according to claim 2, characterised in that the downcomer conduit (28) is situated coaxially with respect to a hot gas riser conduit (27) which leads to the residual-heat cooler or coolers (10, 10a, 10b).

4. Residual-heat removal system to one of claims 1, 2 or 3, characterised in that an intermediate space (33) situated between side reflector (13) and thermal shield (26) forms a part of the cooling gas return conduit (19).

5. Residual-heat removal system according to one of the preceding claims, characterised in that a closure member (20) which opens in the event of residual heat being removed is interposed in the cooling gas return conduit (19).

6. Residual-heat removal system according to one of the preceding claims, characterised in that the suction removal conduit (12) at the side reflector (13) is connected to a reflector element (22, 23) whose throughflow apertures are so shaped that the suction removal conduit (12) is protected from neutron beams issuing from the reactor core.

7. Residual-heat removal system according to claim 6, characterised in that the reflector element comprises inner and outer reflector blocks (22, 23) with straight throughflow apertures (24), and the reflector blocks (22, 23) are so arranged in the side reflector (13) that the throughflow apertures (24) of the inner reflector block (22) are arranged offset relatively to the throughflow apertures (24) of the outer reflector block (23).

8. Residual-heat removal system according to one of the preceding claims, characterised in that a plurality of loops (9a, 9b, 9c) for removal of residual heat are connected to the side reflector (13), arranged in parallel.

## Revendications

1. Système d'évacuation de la chaleur résiduelle pour un réacteur à lit de boulets, refroidi par un gaz, dont le coeur du réacteur garni d'éléments combustibles en forme de boulets et traversé en fonctionnement normal du haut vers le bas par un gaz de refroidissement, est entouré d'un réflecteur latéral qui entoure le lit de boulets et s'étend entre l'entrée du gaz de refroidissement et la sortie du gaz de refroidissement du coeur du réacteur, du type dans lequel il est prévu, avec distance par rapport à la sortie du gaz de refroidissement, une conduite d'aspiration pour le gaz de refroidissement dans le cas de l'évacuation de la chaleur résiduelle, reliée au réflecteur latéral et menant à un ou à plusieurs refroidisseurs de la chaleur résiduelle, et dans lequel une conduite de recyclage du gaz de refroidissement, reliée audit refroidisseur ou auxdits refroidisseurs, renvoie le gaz de refroidissement dans le coeur du réacteur, caractérisé par le fait que la conduite d'aspiration (12) est disposée à peu près à mihauteur entre l'entrée (15) du gaz de refroidissement et la sortie (17) du gaz de refroidissement, et que la conduite de recyclage (19) du gaz de refroidissement débouche dans l'entrée (15) du gaz de refroidissement du coeur du réacteur (1).

2. Système d'évacuation de la chaleur résiduelle selon la revendication 1, caractérisé par le fait que le ou les refroidisseurs de la chaleur résiduelle (10, 10a, 10b) comportent une conduite descendante (28) susceptible d'être traversée sous l'action de la pesanteur par le gaz de refroidissement en train de se refroidir, et débouchant dans la conduite de recyclage (19) du gaz de refroidissement.

3. Système d'évacuation de la chaleur résiduelle selon la revendication 2, caractérisé par le fait que la conduite descendante (28) est disposée coaxialement par rapport à une conduite ascendante (27) du gaz chaud, menant le gaz de refroidissement chaud au refroidisseur ou aux refroidisseurs de la chaleur résiduelle (10, 10a, 10b).

4. Système d'évacuation de la chaleur résiduelle selon l'une des revendications 1, 2 ou 3, caractérisé par le fait qu'une chambre intermédiaire (33) qui existe entre le réflecteur latéral (13) et l'écran thermique (26), constitue une partie de la conduite de recyclage (19) du gaz de refroidissement.

5. Système d'évacuation de la chaleur résiduelle selon l'une des revendications précédentes, caractérisé par le fait que dans la conduite de recyclage (19) du gaz de refroidissement est inséré un obturateur (20) qui s'ouvre dans le cas de l'évacuation de la chaleur résiduelle.

6. Système d'évacuation de la chaleur résiduelle selon l'une des revendications précédentes, caractérisé par le fait que la conduite d'aspiration (12) est reliée au réflecteur latéral (13), au niveau d'un élément de réflecteur (22, 23) dont les ouvertures de passage de l'écoulement sont conformées de telle façon que la conduite d'aspiration (12) est protégée contre des rayonnements neutroniques sortant du coeur du réacteur.

7. Système d'évacuation de la chaleur résiduelle selon la revendication 6, caractérisé par le fait que l'élément de réflecteur est constitué par une pierre de réflecteur intérieure et une pierre de réflecteur extérieure (22, 23) à ouvertures (24) de l'écoulement s'étendant en ligne droite, et que les pierres de réflecteur (22, 23) sont insérées de telle façon dans le réflecteur latéral (13) que les ouvertures (24) de passage de l'écoulement de la pierre de réflecteur intérieure (22) sont décalées par rapport aux ouvertures (24) de passage de l'écoulement de la pierre de réflecteur extérieure (23).

8. Système d'évacuation de la chaleur résiduelle selon l'une des revendications précédentes, caractérisé par le fait qu'au réflecteur latéral (13) sont reliées, pour l'évacuation de la chaleur résiduelle, des boucles (9a, 9b, 9c) qui sont montées en parallèle.

FIG. 1

FIG.2

FIG.3